(19) Europäisches Patentamt
European Patent Office
Office européen des brevets

(11) EP 4 287 340 A1

(12) EUROPEAN PATENT APPLICATION
published in accordance with Art. 153(4) EPC

(43) Date of publication:
06.12.2023 Bulletin 2023/49

(21) Application number: 21966099.0

(22) Date of filing: 03.12.2021

(51) International Patent Classification (IPC):
H01M 10/058 (2010.01)

(52) Cooperative Patent Classification (CPC):
H01M 10/058

(86) International application number:
PCT/CN2021/135411

(87) International publication number:
WO 2023/097673 (08.06.2023 Gazette 2023/23)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Contemporary Amperex Technology
Co., Limited
Ningde, Fujian 352100 (CN)

(72) Inventors:
• CHANG, Wen
Ningde, Fujian 352100 (CN)
• HU, Jun
Ningde, Fujian 352100 (CN)

• FENG, Shiping
Ningde, Fujian 352100 (CN)
• CHEN, Canbin
Ningde, Fujian 352100 (CN)
• WU, Qing
Ningde, Fujian 352100 (CN)
• ZHENG, Qiuhui
Ningde, Fujian 352100 (CN)
• LU, Haoran
Ningde, Fujian 352100 (CN)

(74) Representative: Rowlands, Stuart Michael
Maucher Jenkins
Seventh Floor Offices
Artillery House
11-19 Artillery Row
London SW1P 1RT (GB)

(54) REJECTION CONTROL METHOD AND APPARATUS FOR BATTERY ELECTRODE PLATE, AND DEVICE

(57) The embodiments of the present application relate to the technical field of batteries. Provided are a rejection method and apparatus for a battery electrode plate, and a device. The method comprises: during the process of a driving mechanism driving the transportation of a battery electrode plate to a rejection mechanism, if it is detected by an electrode plate defect detection mechanism that the battery electrode plate is a defective electrode plate, recording a first distance of the defective electrode plate, wherein the first distance is the distance from the defective electrode plate to the rejection mechanism; during the process of transporting the defective electrode plate from the electrode plate defect detection mechanism to the rejection mechanism, acquiring a second distance at which the driving mechanism drives the defective electrode plate to move; updating the first distance of the defective electrode plate on the basis of the second distance; and when the updated first distance of the defective electrode plate meets a preset condition, controlling the rejection mechanism to reject the defective electrode plate.

During a transmission process of a battery electrode plate to the defect rejection mechanism as driven by the drive mechanism, upon the defective electrode plate detection mechanism detects that the battery electrode plate is a defective electrode plate, recording a first distance of the defective electrode plate — 201

Obtaining a second distance that the defective electrode plate moves as driven by the drive mechanism, during a transmission process of the defective electrode plate from the defective electrode plate detection mechanism to the defect rejection mechanism — 202

Updating the first distance of the defective electrode plate based on the second distance — 203

Controlling the defect rejection mechanism to reject the defective electrode plate, under a condition that the updated first distance of the defective electrode plate satisfies a preset condition — 204

Fig. 2

Processed by Luminess, 75001 PARIS (FR)

## Description

### TECHNICAL FIELD

The present application relates to the technical field of batteries, and more particularly to a control method, apparatus and device for defect rejection of battery electrode plates.

### BACKGROUND

With the rapid development of battery technology, batteries (e.g. lithium batteries, etc.) are more widely used. For example, batteries can be used in vehicle manufacture to produce electric vehicles. A battery electrode plate is one of the basic components of a battery. In a production process of batteries, positive and negative electrode plates will be combined with two layers of separators to form a laminated battery cell, after being processed by processes such as coating, slitting and welding tab, etc. However, since there may be defects in the battery electrode plates before the combination, the laminated battery cell after the combination may be unusable, which causes a waste of separators.

### SUMMARY

The present application provides a control method, apparatus and device for defect rejection of battery electrode plates, which can avoid combining a defective battery electrode plate with a separator, so as to avoid wasting the separator.

In a first aspect, a control method for defect rejection of battery electrode plates is provided, which is applicable to a defect rejection device including a drive mechanism, a defective electrode plate detection mechanism and a defect rejection mechanism. The method includes:

during a transmission process of a battery electrode plate to the defect rejection mechanism as driven by the drive mechanism, upon the defective electrode plate detection mechanism detecting that the battery electrode plate is a defective electrode plate, recording a first distance of the defective electrode plate, which is a distance from the defective electrode plate to the defect rejection mechanism;

obtaining a second distance that the defective electrode plate moves as driven by the drive mechanism, during a transmission process of the defective electrode plate from the defective electrode plate detection mechanism to the defect rejection mechanism;

updating the first distance of the defective electrode plate based on the second distance; and

controlling the defect rejection mechanism to reject the defective electrode plate, under a condition that the updated first distance of the defective electrode plate satisfies a preset condition.

In the embodiment of the present application, during a transmission process of a battery electrode plate to the defect rejection mechanism as driven by the drive mechanism, upon the defective electrode plate detection mechanism detecting that the battery electrode plate is a defective electrode plate, a first distance from the defective electrode plate to the defect rejection mechanism can be recorded, during a transmission process of the defective electrode plate from the defective electrode plate detection mechanism to the defect rejection mechanism, a second distance that the defective electrode plate moves as driven by the drive mechanism can be obtained, the first distance of the defective electrode plate can be updated based on the second distance, so that the defect rejection mechanism can be controlled to reject the defective electrode plate, under a condition that the updated first distance of the defective electrode plate satisfies a preset condition. As such, during a transmission process of battery electrode plates in the defect rejection device, the defect rejection mechanism can be controlled to reject the defective electrode plate accurately, so as to avoid combining the defective electrode plate with a separator, thereby avoids wasting the separator.

In some embodiments, upon the defective electrode plate detection mechanism detecting that the battery electrode plate is the defective electrode plate, recording the first distance of the defective electrode plate includes:

adding an element associated with the defective electrode plate into a stack of the defect rejection device, with the first distance of the defective electrode plate stored in the stack as an element value of the element associated with the defective electrode plate, upon the defective electrode plate detection mechanism detecting that the battery electrode plate is the defective electrode plate.

Updating the first distance of the defective electrode plate based on the second distance includes:

updating the first distance of each element in the stack based on the second distance.

In the embodiments, the first distance of the detected defective electrode plate is saved as the element value of the element associated with the defective electrode plate in the stack, and when being updated, the first distances of all elements in the stack are simultaneously updated based on the second distance. Since the stack follows the first-in-first-out principle, element values of a plurality of elements can be recorded simultaneously, so as to avoid errors in the recorded first distances of the plurality of defective electrode plates and update the first distances of the plurality of defective electrode plates at the same time, which saves computational resources.

In some embodiments, the method further includes:

controlling the defect rejection mechanism to cut a string of battery electrode plates to be combined with separators, under a condition that a quantity of elements in the stack is less than or equal to zero, and a length of the string of battery electrode plates passing through the defect rejection mechanism is a preset battery cell length.

In the embodiments, under the condition that the quantity of elements in the stack is less than or equal to zero, and the length of the string of battery electrode plates passing through the defect rejection mechanism is the preset battery cell length, the defect rejection mechanism may further cut the string of battery electrode plates, which can be used to combine with the separators, so that not only the defective electrode plate is cut off, but also the normal electrode plates are cut.

In some embodiments, obtaining the second distance that the defective electrode plate moves as driven by the drive mechanism includes:

upon arrival of an $N^{th}$ scanning period, obtaining a first feedback value of the drive mechanism in the $N^{th}$ scanning period, wherein N is an integer greater than 1, and the first feedback value is associated with a distance that the battery electrode plate moves as driven by the drive mechanism; and

determining a difference between the first feedback value and a second feedback value as the second distance, wherein the second feedback value is a feedback value of the drive mechanism in an $(N-1)^{th}$ scanning period.

In the embodiments, the processor obtains the first feedback value of the drive mechanism in the present scanning period (i.e., the $N^{th}$ scanning period) and the second feedback value of the drive mechanism in the previous scanning period (i.e., the $(N-1)^{th}$ scanning period), and determines the difference between the first feedback value and the second feedback value as the second distance, so that the obtained second distance is more accurate and the approach is more flexible.

In some embodiments, upon the defective electrode plate, a detection mechanism detects that the battery electrode plate is the defective electrode plate, and recording the first distance of the defective electrode plate includes:

determining that the battery electrode plate is the defective electrode plate, under a condition that the defective electrode plate detection mechanism detects that the battery electrode plate is provided with a defect identification, wherein the defect identification is an identification pasted on a battery electrode plate of a roll of battery electrode plates that is provided on the defect rejection device; and

recording the first distance of the defective electrode plate.

In the embodiments, the defect identification is pasted on the battery electrode plate of the roll of battery electrode plates provided on the defect rejection device, so that the defect rejection device, when detecting the defect identification, can reject the battery electrode plate pasted with the defect identification as a defective electrode plate, so as to reject a battery electrode plate of the roll of battery electrode plates according to user requirements.

In some embodiments, the defect rejection device further includes a cutting position detection mechanism provided between the defective electrode plate detection mechanism and the defect rejection mechanism.

Before controlling the defect rejection mechanism to reject the defective electrode plate, under the condition that the updated first distance of the defective electrode plate satisfies the preset condition, the method may further include: updating the first distance of the defective electrode plate to a third distance, based on a cutting position signal, wherein the cutting position signal is a signal generated by the cutting position detection mechanism when detecting a cutting position of the defective electrode plate based on the updated first distance of the defective electrode plate, and the third distance is a distance between the cutting position detection mechanism and the defect rejection mechanism.

Controlling the defect rejection mechanism to reject the defective electrode plate may include: controlling the defect rejection mechanism to cut off the defective electrode plate at the cutting position, to reject the defective electrode plate.

In the embodiments, the updated first distance of the defective electrode plate is updated to the third distance, based on the cutting position signal generated by the cutting position detection mechanism when detecting the cutting position, so as to avoid an influence of an error in the updated first distance due to the delay of the scanning period and improve the accuracy of the cutting of the battery electrode plates.

In some embodiments, during the transmission process of the battery electrode plate to the defect rejection mechanism as driven by the drive mechanism, the drive mechanism is coupled to the defect rejection mechanism.

Controlling the defect rejection mechanism to cut off the defective electrode plate at the cutting position, to reject the defective electrode plate may include:

under a condition that it is determined that the cutting position of the defective electrode plate reaches the defect rejection mechanism, decoupling the drive mechanism from the defect rejection mechanism, controlling the drive mechanism to stop driving transmission of the defective electrode plate, and controlling the defect rejection mechanism to cut off the defective electrode plate at the cutting position, to reject the defective electrode plate.

In the embodiments, the drive mechanism is coupled to the defect rejection mechanism, during the transmission process of the battery electrode plate, under a condition that the cutting position of the defective electrode plate reaches the cutting apparatus, the drive mechanism is controlled timely to be decoupled from the defect rejection mechanism, so as to stop the drive mechanism from driving the transmission of the defective electrode plate, and the cutting apparatus is controlled to cut off the defective electrode plate at the cutting position and reject the defective electrode plate, thereby achieving controllable shutdown of the defect rejection device, ensuring the continuity of combination and production of battery electrode plates, and improving the production efficiency.

In a second aspect, a control apparatus for defect rejection of battery electrode plates is provided, which is applicable to a defect rejection device including a drive mechanism, a defective electrode plate detection mechanism and a defect rejection mechanism. The apparatus includes:

a first distance recording module, configured to, during a transmission process of a battery electrode plate to the defect rejection mechanism as driven by the drive mechanism, upon the defective electrode plate detection mechanism detecting that the battery electrode plate is a defective electrode plate, record a first distance of the defective electrode plate, which is a distance from the defective electrode plate to the defect rejection mechanism;

a second distance obtaining module, configured to obtain a second distance that the defective electrode plate moves as driven by the drive mechanism, during a transmission process of the defective electrode plate from the defective electrode plate detection mechanism to the defect rejection mechanism;

a first distance updating module, configured to update the first distance of the defective electrode plate based on the second distance; and

a first control module, configured to control the defect rejection mechanism to reject the defective electrode plate, under a condition that the updated first distance of the defective electrode plate satisfies a preset condition.

In the embodiment of the present application, during a transmission process of a battery electrode plate to the defect rejection mechanism as driven by the drive mechanism, upon the defective electrode plate detection mechanism detecting that the battery electrode plate is a defective electrode plate, a first distance from the defective electrode plate to the defect rejection mechanism can be recorded, during a transmission process of the defective electrode plate from the defective electrode plate detection mechanism to the defect rejection mechanism, a second distance that the defective electrode plate moves as driven by the drive mechanism can be obtained, the first distance of the defective electrode plate can be updated based on the second distance, so that the defect rejection mechanism can be controlled to reject the defective electrode plate, under a condition that the updated first distance of the defective electrode plate satisfies a preset condition. As such, during a transmission process of battery electrode plates in the defect rejection device, the defect rejection mechanism can be controlled to reject the defective electrode plate accurately, so as to avoid combining the defective electrode plate with a separator, thereby avoids wasting the separator.

In some embodiments, the first distance recording module is specifically configured to: add an element associated with the defective electrode plate into a stack of the defect rejection device, with the first distance of the defective electrode plate stored in the stack as an element value of the element associated with the defective electrode plate, upon the defective electrode plate detection mechanism detecting that the battery electrode plate is the defective electrode plate.

The first distance updating module may be specifically configured to: update the first distance of each element in the stack based on the second distance.

In the embodiments, the first distance of the detected defective electrode plate is saved as the element value of the element associated with the defective electrode plate in the stack, and when being updated, the first distances of all elements in the stack are simultaneously updated based on the second distance. Since the stack follows the first-in-first-out principle, element values of a plurality of elements can be recorded simultaneously, so as to avoid errors in the recorded first distances of the plurality of defective electrode plates and update the first distances of the plurality of defective electrode plates at the same time, which saves computational resources.

In some embodiments, the apparatus further includes: a second control module, configured to control the defect rejection mechanism to cut a string of battery electrode plates to be combined with separators, under a condition that a quantity of elements in the stack is less than or equal to zero, and a length of the string of battery electrode plates passing through the defect rejection mechanism is a preset battery cell length.

In the embodiments, under the condition that the quantity of elements in the stack is less than or equal to zero, and the length of the string of battery electrode plates passing through the defect rejection mechanism is the preset battery cell length, the defect rejection mechanism may further cut the string of battery electrode plates, which can be used to combine with the separators, so that not only the defective electrode plate is cut off, but also the normal electrode plates are cut.

In some embodiments, the second distance obtaining module includes:

a feedback value obtaining unit, configured to, upon arrival of an $N^{th}$ scanning period, obtain a first feedback value of the drive mechanism in the $N^{th}$ scanning period, wherein N is an integer greater than 1, and the first feedback value is associated with a distance that the battery electrode plate moves as driven by the drive mechanism; and
a second distance determining unit, configured to determine a difference between the first feedback value and a second feedback value as the second distance, wherein the second feedback value is a feedback value of the drive mechanism in an $(N-1)^{th}$ scanning period.

In the embodiments, the processor obtains the first feedback value of the drive mechanism in the present scanning period (i.e., the $N^{th}$ scanning period) and the second feedback value of the drive mechanism in the previous scanning period (i.e., the $(N-1)^{th}$ scanning period), and determines the difference between the first feedback value and the second feedback value as the second distance, so that the obtained second distance is more accurate and the approach is more flexible.

In some embodiments, the first distance recording module includes:

a defective electrode plate determining unit, configured to determine that the battery electrode plate is the defective electrode plate, under a condition that the defective electrode plate detection mechanism detects that the battery electrode plate is provided with a defect identification, wherein the defect identification is an identification pasted on a battery electrode plate of a roll of battery electrode plates that is provided on the defect rejection device; and
a first distance recording unit, configured to record the first distance of the defective electrode plate.

In the embodiments, the defect identification is pasted on the battery electrode plate of the roll of battery electrode plates provided on the defect rejection device, so that the defect rejection device, when detecting the defect identification, can reject the battery electrode plate pasted with the defect identification as a defective electrode plate, so as to reject a battery electrode plate of the roll of battery electrode plates according to user requirements.

In some embodiments, the defect rejection device further includes a cutting position detection mechanism provided between the defective electrode plate detection mechanism and the defect rejection mechanism.

The apparatus may further include:

a second distance updating module, configured to update the updated first distance of the defective electrode plate to a third distance, based on a cutting position signal, wherein the cutting position signal is a signal generated by the cutting position detection mechanism when detecting a cutting position of the defective electrode plate based on the updated first distance of the defective electrode plate, and the third distance is a distance between the cutting position detection mechanism and the defect rejection mechanism.

The first control module may be specifically configured to:

control the defect rejection mechanism to cut off the defective electrode plate at the cutting position, to reject the defective electrode plate.

In the embodiments, the updated first distance of the defective electrode plate is updated to the third distance, based on the cutting position signal generated by the cutting position detection mechanism when detecting the cutting position, so as to avoid an influence of an error in the updated first distance due to the delay of the scanning period and improve the accuracy of the cutting of the battery electrode plates.

In some embodiments, during the transmission process of the battery electrode plate to the defect rejection mechanism as driven by the drive mechanism, the drive mechanism is coupled to the defect rejection mechanism.

The first control module may be specifically configured to:

under a condition that it is determined that the cutting position of the defective electrode plate reaches the defect rejection mechanism, decouple the drive mechanism from the defect rejection mechanism, control the drive mechanism to stop driving transmission of the defective electrode plate, and control the defect rejection mechanism to cut off the defective electrode plate at the cutting position, to reject the defective electrode plate.

In the embodiments, the drive mechanism is coupled to the defect rejection mechanism, during the transmission process of the battery electrode plate, under a condition that the cutting position of the defective electrode plate reaches the cutting apparatus, the drive mechanism is controlled timely to be decoupled from the defect rejection mechanism, so as to stop the drive mechanism from driving the transmission of the defective electrode plate, and the cutting apparatus is controlled to cut off the defective electrode plate at the cutting position and reject the defective electrode plate, thereby achieving controllable shutdown of the defect rejection device, ensuring the continuity of combination and production of battery electrode plates, and improving the production efficiency.

In a third aspect, a defect rejection device is provided. The defect rejection device includes a processor, a memory and programs or instructions stored in the memory and executable on the processor. The programs or instructions, when executed by the processor, cause steps of the control method for defect rejection of battery electrode plates according to any one of the first aspect to be implemented.

In a fourth aspect, a readable storage medium is provided. The readable storage medium has programs or instructions stored thereon. The programs or instructions, when executed by a processor, cause steps of the control method for defect rejection of battery electrode plates according to any one of the first aspect to be implemented.

**BRIEF DESCRIPTION OF THE DRAWINGS**

In order to illustrate technical solutions of the embodiments of the present application more clearly, a brief introduction of drawings to be used in the embodiments of the present application will be given below. The drawings described below are only some embodiments of the present application, and for those having ordinary skills in the art, other drawings can be obtained according to the drawings without any inventive effort.

Fig. 1 is a schematic structural diagram of a defect rejection device disclosed by an embodiment of the present application;
Fig. 2 is a schematic flowchart of a control method for defect rejection of battery electrode plates disclosed by an embodiment of the present application;
Fig. 3 is a schematic structural diagram of a control apparatus for defect rejection of battery electrode plates disclosed by an embodiment of the present application; and
Fig. 4 is a schematic structural diagram of another defect rejection device disclosed by an embodiment of the present application.

**DETAILED DESCRIPTION**

The embodiments of the technical solutions of the present application will be described in detail below combined with the drawings. The following embodiments are provided merely to illustrate the technical solutions of the present application more clearly, and thus are provided only as examples, and not to limit the protection scope of the present application.

In the description of the application, it should be noted that, unless otherwise stated, "a plurality of" means two or more; the terms "top", "bottom", "left", "right", "inside", and "outside" used to indicate orientation or position relationships are only for the purpose of facilitating the description of the application and simplifying the description, and do not indicate or imply that an apparatus or element referred to must have a specific orientation, be constructed and operated in a specific orientation, and therefore cannot be understood as limitations to the application. In addition, the terms "first", "second", "third" etc. are only used for descriptive purposes, and cannot be understood as indicating or implying relative importance. "Vertical" does not means properly vertical, but within the tolerance. "Parallel" does not means properly parallel, but within the tolerance.

The orientation words appearing in the following description are all directions shown in the figures, and do not limit the specific structure of the application. In the description of the application, it should also be noted that, unless otherwise explicitly stated and defined, the terms "installation", "interconnection" and "connection" should be understood in a broad sense, for example, it may be a fixed connection or a detachable connection, an integral connection; it may be a direct connection or an indirect connection through an intermediate medium. For those of ordinary skills in the art, specific meanings of the above-mentioned terms in this application may be understood according to specific circumstances.

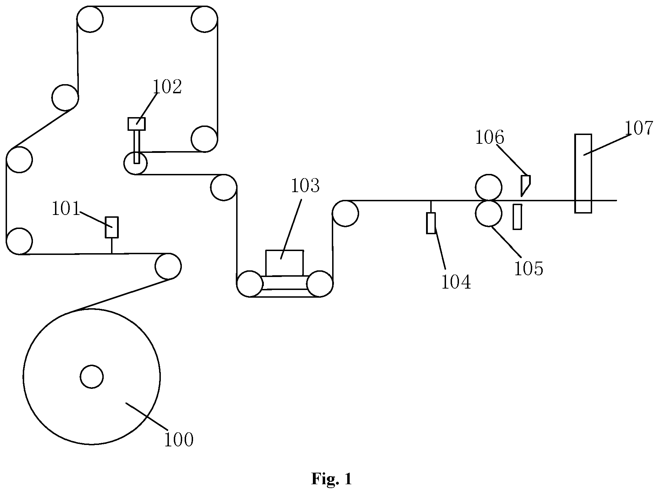

Fig. 1 shows a schematic structural diagram of a defect rejection device provided by an embodiment of the present application. As shown in Fig. 1, the defect rejection device may include a reel 100, a defective electrode plate detection mechanism 101, a cutting position detection mechanism 104, a drive mechanism 105 and a defect rejection mechanism 106.

The reel 100 may be used to accommodate a roll of battery electrode plates, and unreel the battery electrode plates in the roll of battery electrode plates during a defect rejection process, so that the battery electrode plates can be transmitted in the defect rejection device. The roll of battery electrode plates may be a roll of positive battery electrode plates or a roll of negative battery electrode plates.

The defective electrode plate detection mechanism 101 may be used to detect whether there is any defect (such as a crease or a missing part, etc.) on a passing battery electrode plate. Additionally, the defective electrode plate detection mechanism 101 may be any apparatus capable of detecting a defective battery electrode plate, for example, the defective electrode plate detection mechanism 101 may be an image detection device or the like.

The cutting position detection mechanism 104 may be used to detect a tab or a crease cut hole on a passing battery electrode plate and generate a cut signal. The cutting position detection mechanism may be an optical fiber sensor or the like.

The drive mechanism 105 may be used to drive a battery electrode plate to move, during a transmission process of the battery electrode plate on the defect rejection device.

The defect rejection mechanism 106 may include a cutting apparatus 1061 and a defect rejection apparatus 1062. The cutting apparatus 1061 may be used to cut off the battery electrode plate being transmitted. The defect rejection apparatus 1062 may be used to take up the defective battery electrode plate that has been cut off by the defect rejection apparatus 1062.

In addition, the defect rejection device may further include a tension mechanism 102 and a deviation rectifying mechanism 103.

The defect rejection device may further include a processor (not shown) that can be used to generate control signals to respectively control the driving mechanism drive mechanism 105, the cutting apparatus 106 and the defect rejection mechanism 107, during a transmission process of battery electrode plates on the defect rejection device. The processor may be a programmable logic controller (PLC) and the like.

The tension mechanism 102 may be used to provide tension to a battery electrode plate to place the battery electrode plate in tension, during a transmission process of the battery electrode plate on the defect rejection device.

The deviation rectifying mechanism 103 may be used to rectify a battery electrode plate that deviates from its transmission path to bring the battery electrode plate to its transmission path, during a transmission process of the battery electrode plate on the defect rejection device.

Based on the above-mentioned defect rejection device, an embodiment of the present application further provides a control method for defect rejection of battery electrode plates, which is described herein.

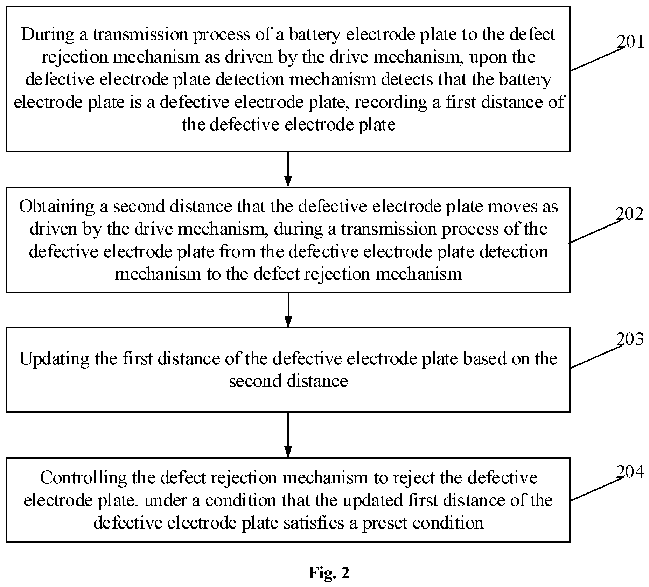

Fig. 2 shows a schematic flowchart of the control method for defect rejection of battery electrode plates provided by the embodiment of the present application. The control method for defect rejection of battery electrode plates can be applied to the above-mentioned defect rejection device. As shown in Fig. 2, the control method for defect rejection of battery electrode plates includes (at least) the following steps 201 to 204.

At step 201, during a transmission process of a battery electrode plate to the defect rejection mechanism as driven by the drive mechanism, upon the defective electrode plate detection mechanism detecting that the battery electrode plate is a defective electrode plate, a first distance of the defective electrode plate is recorded, which is a distance from the defective electrode plate to the defect rejection mechanism.

At step 202, a second distance that the defective electrode plate moves as driven by the drive mechanism is obtained, during a transmission process of the defective electrode plate from the defective electrode plate detection mechanism to the defect rejection mechanism.

At step 203, the first distance of the defective electrode plate is updated based on the second distance.

At step 204, the defect rejection mechanism is controlled to reject the defective electrode plate, under a condition that the updated first distance of the defective electrode plate satisfies a preset condition.

In the embodiment of the present application, during a transmission process of a battery electrode plate to the defect rejection mechanism as driven by the drive mechanism, upon the defective electrode plate detection mechanism detecting that the battery electrode plate is a defective electrode plate, a first distance from the defective electrode plate to the defect rejection mechanism may be recorded, during a transmission process of the defective electrode plate from the defective electrode plate detection mechanism to the defect rejection mechanism, a second distance that the defective electrode plate moves as driven by the drive mechanism may be obtained, the first distance of the defective electrode plate may be updated based on the second distance, so that the defect rejection mechanism may be controlled to reject the defective electrode plate, under a condition that the updated first distance of the defective electrode plate satisfies a preset condition. As such, during a transmission process of battery electrode plates in the defect rejection device, the defect rejection mechanism can be controlled to reject the defective electrode plate accurately, so as to avoid combining the defective electrode plate with a separator, thereby avoids wasting the separator.

In the above step 101, during a transmission process of battery electrode plates to the defect rejection mechanism driven by the drive mechanism, the defective electrode plate detection mechanism may detect whether there is a defect on a passing battery electrode plate, and under a condition that the defective electrode plate detection mechanism detects that there is a defect on the battery electrode plate, the processor can determine that the battery electrode plate passing through the defective electrode plate detection mechanism is a defective electrode plate, and at this time, the processor can record a distance from the defective electrode plate to the defect rejection mechanism.

Since positions of the defective electrode plate detection mechanism and the defect rejection mechanism are fixed, a transmission distance between the defective electrode plate detection mechanism and the defect rejection mechanism may be recorded as the first distance. The transmission distance is a distance that the battery electrode plate moves from the defective electrode plate detection mechanism to the defect rejection mechanism.

For example, a transmission distance L0 between defective electrode plate detection mechanism and the cutting apparatus is preset in the processor, and under a condition that the defective electrode plate detection mechanism detects the defective electrode plate, the processor can record a distance from the defective electrode plate to the defect rejection mechanism (i.e., the above-mentioned first distance) as L0.

In addition, as mentioned above, the defective electrode plate detection mechanism may detect whether there is a defect on a passing battery electrode plate, which may be a crease or a missing part, etc. on the passing battery electrode plate, and if the defective electrode plate detection mechanism detects any crease or missing part, etc. on the passing battery electrode plate, the processor determines that the battery electrode plate is the defective electrode plate.

It should be noted that, the processor may record the first distance of the defective electrode plate by caching the first distance of the defective electrode plate into a memory. For example, among others, there may be a cache list provided in a cache area of the processor, and the processor may cache the first distance of the defective electrode plate in the cache list.

In the above step 202, after the processor records the first distance of the defective electrode plate, the processor may obtain the second distance that the defective electrode plate moves as driven by the drive mechanism, during the process that the drive mechanism drives the defective electrode plate to transmit from the defective electrode plate detection mechanism to the defect rejection mechanism.

The processor obtaining the second distance that the defective electrode plate moves as driven by the drive mechanism may include the processor obtaining a drive speed of the drive mechanism and a timing duration and determining a product of the drive speed and the timing duration as the above-mentioned second distance.

It should be noted that the drive speed is a speed at which an electrode plate moves as driven by the drive mechanism, which can be determined according to a rotation speed of a main shaft of the drive mechanism and a transmission parameter (such as a diameter of a transmission gear, etc.) of a transmission assembly (such as the transmission gear, etc.) between the main shaft and the transmission. Since the transmission parameter of the transmission assembly is usually fixed, an unoccupied apparatus can calculate the drive speed by simply obtaining the rotation speed of the main shaft of the drive mechanism.

In addition, the processor obtaining the timing duration may include that a timer is preset in the processor and starts to count upon the defective electrode plate detection mechanism detecting the defective electrode plate.

In the above step 203, after the processor obtains the second distance, the processor may update the first distance of the defective electrode plate based on the obtained second distance.

It should be noted updating the first distance of the defective electrode plate based on the second distance may include taking a difference between the first distance and the second distance as the updated first distance.

In the above step 204, after the processor updates the first distance, the processor can judge whether the updated first distance satisfies the preset condition, and under a condition that the updated first distance satisfies the preset condition, control the defect rejection mechanism to reject the defective electrode plate.

Judging whether the updated first distance satisfies the preset condition may include judging whether the updated first distance is less than or equal to zero, and under a condition that the updated first distance is less than or equal to zero, determining that the updated first distance satisfies the preset condition; or otherwise, the preset condition is not satisfied.

In addition, rejecting the defective electrode plate by the defect rejection mechanism may include that processor, when determining that the updated first distance satisfies the preset condition, generates a cutting signal and send it to the cutting apparatus, the cutting apparatus cut at a cutting position for the defective electrode plate in response to the cutting signal, to cut off the defective electrode plate, and the defect rejection apparatus winds up the defective electrode plate that has been cut off.

It should be noted that the above-mentioned cutting position is determined by the cutting position detection mechanism by way of detecting a tab of a battery electrode plate or a cut hole between two adjacent battery electrode plates, before the defective electrode plate enters the position of the cutting apparatus.

In some embodiments, upon the defective electrode plate detection mechanism detecting that the battery electrode plate is the defective electrode plate, recording the first distance of the defective electrode plate may include the following operations:

determining that the battery electrode plate is the defective electrode plate, under a condition that the defective electrode plate detection mechanism detects that the battery electrode plate is provided with a defect identification, wherein the defect identification is an identification provided on a first battery electrode plate of a roll of battery electrode plates on the defect rejection device; and
recording the first distance of the defective electrode plate.

In this embodiment, the defect identification is pasted on the battery electrode plate of the roll of battery electrode plates provided on the defect rejection device, so that the defect rejection device, when detecting the defect identification, can reject the battery electrode plate pasted with the defect identification as a defective electrode plate, so as to reject a battery electrode plate of the roll of battery electrode plates according to user requirements.

The battery electrode plate pasted with the defect identification may be any battery electrode plate of the roll of battery electrode plates. Particularly, the defect identification may be pasted on a battery electrode plate between the defective electrode plate detection mechanism and the roll of battery electrode plates, when the roll of battery electrode plates is disposed on the defect rejection device.

In addition, the defective electrode plate may be used to indicate rejection of a battery electrode plate pasted with the defect identification; alternatively, the defect identification may be used to indicate rejection of a battery electrode plate pasted with the defect identification and battery electrode plate(s) located before it.

Illustratively, during a threading process of the roll of battery electrode plates in the defect rejection device, since the number of electrode plates located between the defective electrode plate detection mechanism and the cutting apparatus after the threading is unknown, in order to ensure the quality of the battery electrode plates after combination, the defect identification may be pasted on the first battery electrode plate located between the defective electrode plate detection mechanism and the roll of battery electrode plates. Under a condition that the defective electrode plate detection mechanism detects the defect identification, the processor records the first distance of the first battery electrode plate, and updates the first distance during the transmission process of the first battery electrode plate to the cutting apparatus, until the first distance of the first battery electrode plate is less than or equal to zero, the cutting apparatus cutting the first battery electrode plate at the cutting position of the first battery electrode plate, and the defect rejection apparatus winds up the cut first electrode plate and battery electrode plate(s) located before the first battery electrode plate.

In some embodiments, upon the defective electrode plate detection mechanism detecting that the battery electrode plate is the defective electrode plate, recording the first distance of the defective electrode plate may include the following operation:

adding an element associated with the defective electrode plate into a stack of the defect rejection device, with the first distance of the defective electrode plate stored in the stack as an element value of the element associated with the defective electrode plate, upon the defective electrode plate detection mechanism detecting that the battery electrode plate is the defective electrode plate.

Updating the first distance of the defective electrode plate based on the second distance may include the following operation:

updating the first distance of each element in the stack based on the second distance.

In this embodiment, the first distance of the detected defective electrode plate is saved as the element value of the element associated with the defective electrode plate in the stack, and when being updated, the first distances of all elements in the stack are simultaneously updated based on the second distance. Since the stack follows the first-in-first-out principle, element values of a plurality of elements can be recorded simultaneously, so as to avoid errors in the recorded first distances of the plurality of defective electrode plates and update the first distances of the plurality of defective electrode plates at the same time, which saves computational resources.

Illustratively, during a transmission process of a battery electrode plate of a roll of battery electrode plates by the defect rejection device, upon the defective electrode plate detection mechanism detecting the above-mentioned defect identification or defect, the processor determines the defective electrode plate, and saves the first distance L0 of the defective electrode plate at the top of a stack BadMark_DistanceArr [], so that the number of elements saved by the stack BadMark_DistanceArr [] increases by 1; during the transmission process of the battery electrode plate driven by the drive mechanism, the processor obtains the second distance that the defective electrode plate moves as driven by the drive mechanism, and updates an element value (i.e., the first distance) BadMark_DistanceArr [Num] of each stack element in the stack BadMark_DistanceArr [], where $Num = 1, ... , BadMark\_Num$.

In some embodiments, obtaining the second distance that the defective electrode plate moves as driven by the drive mechanism may include the following operations:

upon arrival of an $N^{th}$ scanning period, obtaining a first feedback value of the drive mechanism in the $N^{th}$ scanning period, wherein N is an integer greater than 1, and the first feedback value is associated with a distance that the battery electrode plate moves as driven by the drive mechanism; and

determining a difference between the first feedback value and a second feedback value as the second distance, wherein the second feedback value is a feedback value of the drive mechanism in an $(N-1)^{th}$ scanning period.

In the present embodiment, the processor obtains the first feedback value of the drive mechanism in the present scanning period (i.e., the $N^{th}$ scanning period) and the second feedback value of the drive mechanism in the previous scanning period (i.e., the $(N-1)^{th}$ scanning period), and determines the difference between the first feedback value and the second feedback value as the second distance, so that the obtained second distance is more accurate and the approach is more flexible.

The first feedback value and the second feedback value are associated with a distance that the battery electrode plate moves as driven by the drive mechanism. Particularly, the first feedback value is a transmission distance of the drive mechanism upon arrival of the $N^{th}$ scanning period, and the second feedback value is a transmission distance of the drive mechanism upon arrival of the (N-1)<sup>th</sup>scanning period.

Illustratively, updating the BadMark_DistanceArr [Num] can be achieved according to the following equation (1):

$$BadMark\_DistanceArr\left[Num\right] = BadMark\_DistanceArr\left[Num\right] - IncEncoder \quad (1)$$

In equation (1), IncEncoder is a difference between a feedback value (i.e., the first feedback value) of a primary drive encoder recorded by a PLC in the present scanning period and a feedback value (i.e., the second feedback value) of the primary drive encoder recorded in the previous scanning period.

It should be noted that the duration of each of the above-mentioned scanning periods can be set according to actual needs. For example, the duration of each scanning period may be set according to a spindle speed of the drive mechanism, so that a transmission distance of the drive mechanism within a scanning period is less than or equal to a width of one battery electrode plate, at the present spindle speed of the drive mechanism, and the like.

In the embodiment of the present application, under a condition that the processor can record the first distance of each defective electrode plate in the stack and update the first distance of each defective electrode plate, when the updated first distance of the element at the bottom of the stack satisfies the preset condition, the processor controls the cutting apparatus to cut off the defective electrode plate corresponding to the element.

Illustratively, under a condition that the first distance BadMark_DistanceArr [1] of the first battery electrode plate pasted with the defect identification is recorded in the above-mentioned stack, during the transmission process of the battery electrode plates, since the value of BadMark_DistanceArr [Num] is continuously updated, i.e., gradually decreased, when the element value BadMark_DistanceArr [1] of the element at the bottom of the stack is less than or equal to 0, the processor determines that the first battery electrode plate pasted with the defect identification has reached the cutting apparatus, and the cutting apparatus cuts off the first battery electrode plate at the cutting position of the first battery electrode plate.

In some embodiments, the method may further include the following step:

controlling the defect rejection mechanism to cut a string of battery electrode plates to be combined with separators, under a condition that a quantity of elements in the stack is less than or equal to zero, and a length of the string of battery electrode plates passing through the defect rejection mechanism is a preset battery cell length.

In this embodiment, under the condition that the quantity of elements in the stack is less than or equal to zero, and the length of the string of battery electrode plates passing through the defect rejection mechanism is the preset battery cell length, the defect rejection mechanism may further cut the string of battery electrode plates, which can be used to combine with the separators, so that not only the defective electrode plate is cut off, but also the normal electrode plates are cut.

The above-mentioned preset battery cell length can be set according to actual needs. For example, under a condition that the battery electrode plates are negative electrode plates, the preset battery cell length may be set to be the width of one negative electrode plate; or under a condition that the battery electrode plates are positive electrode plates, the preset battery cell length may be set to be the width of multiple positive electrode plates.

Illustratively, if the drive mechanism drives the battery electrode plates to travel one battery cell length (i.e., the preset battery cell length), and the number of elements BadMark_Num saved in the above-mentioned stack BadMark _DistanceArr [] is less than or equal to 0, it means that the defective electrode plate from the defective electrode plate detection mechanism to the cutting apparatus has been driven out of the cutting position and has been taken up by the defect rejection apparatus, so that there is no defect in the battery electrode plates from the defective electrode plate detection mechanism to the cutting apparatus, and the processor can control the cutting apparatus to cut the string of battery electrode plates of one battery cell length.

In some embodiments, the defect rejection device may further include a cutting position detection mechanism provided between the defective electrode plate detection mechanism and the defect rejection mechanism.

Before controlling the defect rejection mechanism to reject the defective electrode plate, under the condition that the updated first distance of the defective electrode plate satisfies the preset condition, the method may further include the following step:

updating the first distance of the defective electrode plate to a third distance, based on a cutting position signal, wherein the cutting position signal is a signal generated by the cutting position detection mechanism when detecting a cutting position of the defective electrode plate based on the updated first distance of the defective electrode plate, and the third distance is a distance between the cutting position detection mechanism and the defect rejection mechanism.

The above-mentioned controlling the defect rejection mechanism to reject the defective electrode plate may include the following operation:

controlling the defect rejection mechanism to cut off the defective electrode plate at the cutting position, to reject the defective electrode plate.

In the embodiment, the updated first distance of the defective electrode plate is updated to the third distance, based on the cutting position signal generated by the cutting position detection mechanism when detecting the cutting position, so as to avoid an influence of an error in the updated first distance due to the delay of the scanning period and improve the accuracy of the cutting of the battery electrode plates.

It should be noted that the above-mentioned third distance is a distance between the cutting position detection mechanism and the defect rejection mechanism, and may be a distance between the cutting position detection mechanism and the above-mentioned cutting apparatus.

In the embodiments of the present application, when the cutting position of the above-mentioned defective electrode plate reaches the cutting apparatus, the processor controlling the cutting apparatus to cut off the defective electrode plate may include that the processor controls the primary drive mechanism to stop, so as to stop the transmission of the defective electrode plate when the cutting position reaches the cutting apparatus, and in the case that the primary drive mechanism stops, the cutting apparatus cuts off the defective electrode plate, the defect rejection apparatus, takes up the defective electrode plate, and the cutting apparatus and the defect rejection apparatus are returned after the defective electrode plate is taken up.

In some embodiments, during the transmission process of the battery electrode plate to the defect rejection mechanism as driven by the drive mechanism, the drive mechanism is coupled to the defect rejection mechanism.

Controlling the defect rejection mechanism to cut off the defective electrode plate at the cutting position, to reject the defective electrode plate may include the following operations:

under a condition that it is determined that the cutting position of the defective electrode plate reaches the defect rejection mechanism, decoupling the drive mechanism from the defect rejection mechanism, controlling the drive mechanism to stop driving transmission of the defective electrode plate, and controlling the defect rejection mechanism to cut off the defective electrode plate at the cutting position, to reject the defective electrode plate.

In this embodiment, the drive mechanism is coupled to the defect rejection mechanism, during the transmission process of the battery electrode plate, under a condition that the cutting position of the defective electrode plate reaches the cutting apparatus, the drive mechanism is controlled timely to be decoupled from the defect rejection mechanism, so as to stop the drive mechanism from driving the transmission of the defective electrode plate, and the cutting apparatus is controlled to cut off the defective electrode plate at the cutting position and reject the defective electrode plate, thereby achieving controllable shutdown of the defect rejection device, ensuring the continuity of combination and production of battery electrode plates, and improving the production efficiency.

It should be noted that after the above-mentioned defect rejection mechanism has rejected the defective electrode plate, the drive mechanism and the defect rejection mechanism can be coupled again to ensure the transmission of battery electrode plates.

A schematic structural diagram of a control apparatus for defect rejection of battery electrode plates according to an embodiment of the present application will be described in detail with reference to the drawings.

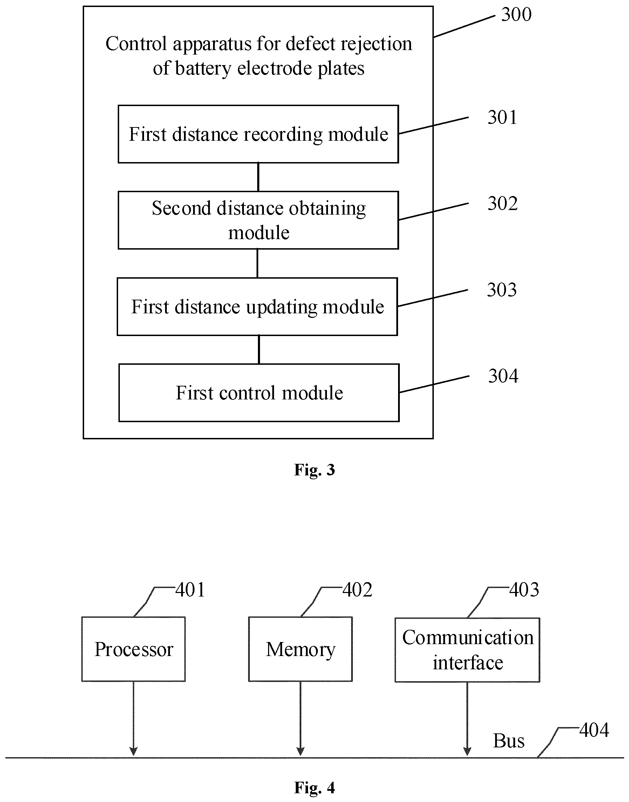

Fig. 3 shows a schematic structural diagram of a control apparatus for defect rejection of battery electrode plates provided by an embodiment of the present application. As shown in Fig. 3, the control apparatus for defect rejection of battery electrode plates includes the following modules:

a first distance recording module 301, configured to, during a transmission process of a battery electrode plate to the defect rejection mechanism as driven by the drive mechanism, upon the defective electrode plate detection mechanism detecting that the battery electrode plate is a defective electrode plate, record a first distance of the defective electrode plate, which is a distance from the defective electrode plate to the defect rejection mechanism;
a second distance obtaining module 302, configured to obtain a second distance that the defective electrode plate moves as driven by the drive mechanism, during a transmission process of the defective electrode plate from the defective electrode plate detection mechanism to the defect rejection mechanism;
a first distance updating module 303, configured to update the first distance of the defective electrode plate based on the second distance; and
a first control module 304, configured to control the defect rejection mechanism to reject the defective electrode plate, under a condition that the updated first distance of the defective electrode plate satisfies a preset condition.

In the embodiment of the present application, during a transmission process of a battery electrode plate to the defect rejection mechanism as driven by the drive mechanism, upon the defective electrode plate detection mechanism detecting that the battery electrode plate is a defective electrode plate, a first distance from the defective electrode plate to the defect rejection mechanism may be recorded, during a transmission process of the defective electrode plate from the defective electrode plate detection mechanism to the defect rejection mechanism, a second distance that the defective electrode plate moves as driven by the drive mechanism may be obtained, the first distance of the defective electrode plate may be updated based on the second distance, so that the defect rejection mechanism may be controlled to reject the defective electrode plate, under a condition that the updated first distance of the defective electrode plate satisfies

EP 4 287 340 A1

a preset condition. As such, during a transmission process of battery electrode plates in the defect rejection device, the defect rejection mechanism can be controlled to reject the defective electrode plate accurately, so as to avoid combining the defective electrode plate with a separator, thereby avoids wasting the separator.

In some embodiments, the first distance recording module 301 is specifically configured to:

add an element associated with the defective electrode plate into a stack of the defect rejection device, with the first distance of the defective electrode plate stored in the stack as an element value of the element associated with the defective electrode plate, upon the defective electrode plate detection mechanism detecting that the battery electrode plate is the defective electrode plate.

The first distance updating module 303 is specifically configured to:
update the first distance of each element in the stack based on the second distance.

In this embodiment, the first distance of the detected defective electrode plate is saved as the element value of the element associated with the defective electrode plate in the stack, and when being updated, the first distances of all elements in the stack are simultaneously updated based on the second distance. Since the stack follows the first-in-first-out principle, element values of a plurality of elements can be recorded simultaneously, so as to avoid errors in the recorded first distances of the plurality of defective electrode plates and update the first distances of the plurality of defective electrode plates at the same time, which saves computational resources.

In some embodiments, the apparatus may further include:
a second control module, configured to control the defect rejection mechanism to cut a string of battery electrode plates to be combined with separators, under a condition that a quantity of elements associated with the defective electrode plate in the stack is less than or equal to zero, and a length of the string of battery electrode plates passing through the defect rejection mechanism is a preset battery cell length.

In this embodiment, under the condition that the quantity of elements in the stack is less than or equal to zero, and the length of the string of battery electrode plates passing through the defect rejection mechanism is the preset battery cell length, the defect rejection mechanism may further cut the string of battery electrode plates, which can be used to combine with the separators, so that not only the defective electrode plate is cut off, but also the normal electrode plates are cut.

In some embodiments, the second distance obtaining module may include:

a feedback value obtaining unit, configured to, upon arrival of an $N^{th}$ scanning period, obtain a first feedback value of the drive mechanism in the $N^{th}$ scanning period, wherein N is an integer greater than 1, and the first feedback value is associated with a distance that the battery electrode plate moves as driven by the drive mechanism; and
a second distance determining unit, configured to determine a difference between the first feedback value and a second feedback value as the second distance, wherein the second feedback value is a feedback value of the drive mechanism in an $(N-1)^{th}$ scanning period.

In the present embodiment, the processor obtains the first feedback value of the drive mechanism in the present scanning period (i.e., the $N^{th}$ scanning period) and the second feedback value of the drive mechanism in the previous scanning period (i.e., the $(N-1)^{th}$ scanning period), and determines the difference between the first feedback value and the second feedback value as the second distance, so that the obtained second distance is more accurate and the approach is more flexible.

In some embodiments, the first distance recording module 301 may include:

a defective electrode plate determining unit, configured to determine that the battery electrode plate is the defective electrode plate, under a condition that the defective electrode plate detection mechanism detects that the battery electrode plate is provided with a defect identification, wherein the defect identification is an identification pasted on a battery electrode plate of a roll of battery electrode plates that is provided on the defect rejection device; and
a first distance recording unit, configured to record the first distance of the defective electrode plate.

In this embodiment, the defect identification is pasted on the battery electrode plate of the roll of battery electrode plates provided on the defect rejection device, so that the defect rejection device, when detecting the defect identification, can reject the battery electrode plate pasted with the defect identification as a defective electrode plate, so as to reject a battery electrode plate of the roll of battery electrode plates according to user requirements.

In some embodiments, the defect rejection device may further include a cutting position detection mechanism provided between the defective electrode plate detection mechanism and the defect rejection mechanism.

The apparatus may further include:
a second distance updating module, configured to update the updated first distance of the defective electrode plate to a third distance, based on a cutting position signal, wherein the cutting position signal is a signal generated by the cutting position detection mechanism when detecting a cutting position of the defective electrode plate based on the updated

12

first distance of the defective electrode plate, and the third distance is a distance between the cutting position detection mechanism and the defect rejection mechanism.

The first control module may be specifically configured to:

control the defect rejection mechanism to cut off the defective electrode plate at the cutting position, to reject the defective electrode plate.

In the embodiment, the updated first distance of the defective electrode plate is updated to the third distance, based on the cutting position signal generated by the cutting position detection mechanism when detecting the cutting position, so as to avoid an influence of an error in the updated first distance due to the delay of the scanning period and improve the accuracy of the cutting of the battery electrode plates.

In some embodiments, during the transmission process of the battery electrode plate to the defect rejection mechanism as driven by the drive mechanism, the drive mechanism may be coupled to the defect rejection mechanism.

The first control module may be specifically configured to:

under a condition that it is determined that the cutting position of the defective electrode plate reaches the defect rejection mechanism, decouple the drive mechanism from the defect rejection mechanism, control the drive mechanism to stop driving transmission of the defective electrode plate, and control the defect rejection mechanism to cut off the defective electrode plate at the cutting position, to reject the defective electrode plate.

In this embodiment, the drive mechanism is coupled to the defect rejection mechanism, during the transmission process of the battery electrode plate, under a condition that the cutting position of the defective electrode plate reaches the cutting apparatus, the drive mechanism is controlled timely to be decoupled from the defect rejection mechanism, so as to stop the drive mechanism from driving the transmission of the defective electrode plate, and the cutting apparatus is controlled to cut off the defective electrode plate at the cutting position and reject the defective electrode plate, thereby achieving controllable shutdown of the defect rejection device, ensuring the continuity of combination and production of battery electrode plates, and improving the production efficiency.

Other details of the control apparatus for defect rejection of battery electrode plates, according to the embodiments of the present application, are similar to the control method for defect rejection of battery electrode plates described above in connection with the instances shown in Fig. 2 and Fig. 3, and can achieve the corresponding technical effects, which will not be repeated here for the sake of brevity.

Fig. 4 shows a schematic hardware structural diagram of a defect rejection device provided by an embodiment of the present application.

The defect rejection device may include a processor 401 and a memory 402 having computer program instructions stored thereon.

In particular, the processor 401 may include a central processing unit (CPU), or a specific integrated circuit (Application Specific Integrated Circuit, ASIC), or one or more integrated circuits that may be configured to implement the embodiments of the present application.

The memory 402 may include a mass memory for data or instructions. By way of example and not limitation, the memory 402 may include a hard disk drive (HDD), a floppy disk drive, a flash memory, an optical disk, a magneto-optical disk, a magnetic tape, or a universal serial bus (USB) drive, or a combination of two or more of the above. In some instances, the memory 402 may include a removable or non-removable (or fixed) medium, or the memory 402 may be a non-volatile solid-state memory. In some embodiments, the memory 402 may be internal or external to a battery apparatus.

In some instances, the memory 402 may be a read only memory (ROM). In an instance, the ROM may be a mask programmed ROM, a programmable ROM (PROM), an erasable PROM (EPROM), an electrically erasable PROM (EEPROM), an electrically alterable ROM (EAROM), or a flash memory, or a combination of two or more of these.

The memory 402 may include a random access memory (RAM), a magnetic disk storage media device, an optical storage media device, a flash memory device, an electrical, optical, or other physical/tangible memory storage device. Thus, in general, the memory may include one or more tangible (non-transitory) readable storage media (e.g. a memory device) encoded with software including computer-executable instructions, and the software, when executed (e.g. by one or more processors), is operable to perform the operations described with reference to the method according to an aspect of the disclosure.

The processor 401 can read and execute the computer program instructions stored in the memory 402, to implement the methods in the embodiments shown in Fig. 2 and Fig. 3, and achieve the corresponding technical effects of executing the methods/steps of the instances shown in Fig. 2 and Fig. 3, which will not be repeated here for the sake of brevity.

In one example, the defect rejection device may further include a communication interface 403 and a bus 404. As shown in Fig. 6, the processor 401, the memory 402, and the communication interface 403 are connected and communicate with each other via the bus 404.

The communication interface 403 is used primarily to enable communication between various modules, apparatuses, units, and/or devices in embodiments of the present application.

The bus 404 may include hardware, software, or both, and couple the components of online data traffic billing equipment together. By way of example and not limitation, the bus may include an accelerated graphics port (AGP) or other graphics bus, an extended industry standard architecture (EISA) bus, a front side bus (FSB), a HyperTransport (HT) interconnect, an industry standard architecture (ISA) bus, an Infiniband interconnect, a low pin count (LPC) bus, a memory bus, a Micro Channel Architecture (MCA) bus, a Peripheral Component Interconnect (PCI) bus, a PCI-Express (PCI-X) bus, a Serial Advanced Technology Attachment (SATA) bus, a Video Electronics Standards Association local (VLB) bus, or other suitable bus, or a combination of two or more of these. The bus 404 may include one or more buses, as appropriate. Although embodiments of the present application describe and illustrate a particular bus, the present application contemplates any suitable bus or interconnect.

The defect rejection device can execute the control method for defect rejection of battery electrode plates of the embodiments of the present application, to implement the control method and control apparatus for defect rejection of battery electrode plates described with reference to Fig. 2 and Fig. 3.

In addition, in conjunction with the control method and control apparatus for defect rejection of battery electrode plates in the above-described embodiments, an embodiment of the present application can provide a computer storage medium to implement them. The computer storage medium stores computer program instructions; the computer program instructions, when executed by a processor, implement any battery and its control method in the above-described embodiments.

It should be understood that the present application is not limited to the particular configurations and processes described above and illustrated in the drawings. For the sake of brevity, a detailed description of known methods is omitted herein. In the embodiments described above, a number of specific steps have been described and shown as examples. However, the method processes of the present application are not limited to the specific steps described and illustrated, and those skilled in the art can make various changes, modifications and additions, or change the order between steps, after understanding the gist of the present application.

The functional blocks shown in the structure block diagrams described above may be implemented in hardware, software, firmware, or a combination thereof. When implemented in hardware, the blocks may be, for example, electronic circuits, application specific integrated circuits (ASICs), appropriate firmware, plug-ins, function cards, etc. When implemented in software, the elements of the present application are programs or code segments to perform the required tasks. The programs or code segments can be stored in a machine-readable medium or transmitted over a transmission medium or a communication link by a data signal embodied in a carrier wave. A "machine-readable medium" may include any medium that can store or transmit information. Examples of the machine-readable medium include an electronic circuit, a semiconductor memory device, an ROM, a flash memory, an erasable ROM (EROM), a floppy diskette, a CD-ROM, an optical disk, a hard disk, a fiber optic medium, a radio frequency (RF) link, etc. The code segments may be downloaded via a computer network such as the Internet, an intranet, etc.

It should also be noted that the exemplary embodiments mentioned in the present application describe methods or systems based on a series of steps or apparatuses. However, the present application is not limited to the order of the above-described steps, that is, the steps may be performed in the order mentioned in the embodiments, may be performed in an order different from that in the embodiments, or several steps may be performed simultaneously.

The flowcharts and/or block diagrams of the methods, apparatuses, devices, and computer program products described above with reference to embodiments of the present disclosure describe various aspects of the disclosure. It should be understood that each block in the flowcharts and/or block diagrams and combinations of various blocks in the flowcharts and/or block diagrams can be implemented by computer program instructions. These computer program instructions may be provided to a processor of a general purpose computer, special purpose computer, or other programmable data processing apparatus to produce a machine, so that the instructions, when executed by the processor of the computer or other programmable data processing apparatus, enable the implementation of the functions/acts specified in one or more blocks of the flowcharts and/or block diagrams. Such processor may be, but is not limited to, a general purpose processor, a special purpose processor, an application specific processor, or a field programmable logic circuit. It will also be understood that each block in the block diagrams and/or flowcharts and combinations of blocks in the block diagrams and/or flowcharts, can be implemented by special purpose hardware that performs the specified functions or acts, or a combination of the special purpose hardware and computer instructions.

Finally, it should be noted that the above-mentioned embodiments are merely used to illustrate but not to limit the technical solution of the present application; while the present application has been described in detail with reference to the foregoing embodiments, those of ordinary skills in the art will appreciate that the technical solutions disclosed in the above-mentioned embodiments can still be modified or some or all of the technical features can be replaced by equivalents; and these modifications or replacements will not depart the nature of the corresponding technical solutions from the scope of the technical solutions of the various embodiments of the present application, and should be covered by the scope of the claims and description of the present application. Especially, various technical features mentioned in various embodiments can be combined in any manner as long as there is no structural conflict. The present application is not limited to the particular embodiments disclosed herein, but includes all technical solutions falling within the scope of the claims.

**Claims**

1. A control method for defect rejection of battery electrode plates, applicable to a defect rejection device comprising a drive mechanism, a defective electrode plate detection mechanism and a defect rejection mechanism, the method comprising: during a transmission process of a battery electrode plate to the defect rejection mechanism as driven by the drive mechanism, upon the defective electrode plate detection mechanism detecting that the battery electrode plate is a defective electrode plate, recording a first distance of the defective electrode plate, which is a distance from the defective electrode plate to the defect rejection mechanism; obtaining a second distance that the defective electrode plate moves as driven by the drive mechanism, during a transmission process of the defective electrode plate from the defective electrode plate detection mechanism to the defect rejection mechanism; updating the first distance of the defective electrode plate based on the second distance; and controlling the defect rejection mechanism to reject the defective electrode plate, under a condition that the updated first distance of the defective electrode plate satisfies a preset condition.

2. The method according to claim 1, wherein upon the defective electrode plate detection mechanism detecting that the battery electrode plate is the defective electrode plate, recording the first distance of the defective electrode plate comprises: adding an element associated with the defective electrode plate into a stack of the defect rejection device, with the first distance of the defective electrode plate stored in the stack as an element value of the element associated with the defective electrode plate, upon the defective electrode plate detection mechanism detecting that the battery electrode plate is the defective electrode plate; and updating the first distance of the defective electrode plate based on the second distance comprises: updating the first distance of each element in the stack based on the second distance.

3. The method according to claim 2, further comprising: controlling the defect rejection mechanism to cut a string of battery electrode plates to be combined with separators, under a condition that a quantity of elements in the stack is less than or equal to zero, and a length of the string of battery electrode plates passing through the defect rejection mechanism is a preset battery cell length.

4. The method according to claim 1, wherein obtaining the second distance that the defective electrode plate moves as driven by the drive mechanism comprises: upon arrival of an $N^{th}$ scanning period, obtaining a first feedback value of the drive mechanism in the $N^{th}$ scanning period, wherein N is an integer greater than 1, and the first feedback value is associated with a distance that the battery electrode plate moves as driven by the drive mechanism; and determining a difference between the first feedback value and a second feedback value as the second distance, wherein the second feedback value is a feedback value of the drive mechanism in an $(N-1)^{th}$ scanning period.

5. The method according to claim 1, wherein upon the defective electrode plate detection mechanism detecting that the battery electrode plate is the defective electrode plate, recording the first distance of the defective electrode plate comprises: determining that the battery electrode plate is the defective electrode plate, under a condition that the defective electrode plate detection mechanism detects that the battery electrode plate is provided with a defect identification, wherein the defect identification is an identification pasted on a battery electrode plate of a roll of battery electrode plates that is provided on the defect rejection device; and recording the first distance of the defective electrode plate.

6. The method according to claim 1, wherein the defect rejection device further comprises a cutting position detection mechanism provided between the defective electrode plate detection mechanism and the defect rejection mechanism; before controlling the defect rejection mechanism to reject the defective electrode plate, under the condition that the updated first distance of the defective electrode plate satisfies the preset condition, the method further comprises: updating the first distance of the defective electrode plate to a third distance, based on a cutting position signal, wherein the cutting position signal is a signal generated by the cutting position detection mechanism when detecting a cutting position of the defective electrode plate based on the updated first distance of the defective electrode plate, and the third distance is a distance between the cutting position detection mechanism and the defect rejection mechanism; and controlling the defect rejection mechanism to reject the defective electrode plate comprises: controlling the defect rejection mechanism to cut off the defective electrode plate at the cutting position, to reject the defective electrode plate.

**7.** The method according to claim 6, wherein during the transmission process of the battery electrode plate to the defect rejection mechanism as driven by the drive mechanism, the drive mechanism is coupled to the defect rejection mechanism; and controlling the defect rejection mechanism to cut off the defective electrode plate at the cutting position, to reject the defective electrode plate comprises: under a condition that it is determined that the cutting position of the defective electrode plate reaches the defect rejection mechanism, decoupling the drive mechanism from the defect rejection mechanism, controlling the drive mechanism to stop driving transmission of the defective electrode plate, and controlling the defect rejection mechanism to cut off the defective electrode plate at the cutting position, to reject the defective electrode plate.

**8.** A control apparatus for defect rejection of battery electrode plates, applicable to a defect rejection device comprising a drive mechanism, a defective electrode plate detection mechanism and a defect rejection mechanism, the apparatus comprising: a first distance recording module, configured to, during a transmission process of a battery electrode plate to the defect rejection mechanism as driven by the drive mechanism, upon the defective electrode plate detection mechanism detecting that the battery electrode plate is a defective electrode plate, record a first distance of the defective electrode plate, which is a distance from the defective electrode plate to the defect rejection mechanism; a second distance obtaining module, configured to obtain a second distance that the defective electrode plate moves as driven by the drive mechanism, during a transmission process of the defective electrode plate from the defective electrode plate detection mechanism to the defect rejection mechanism; a first distance updating module, configured to update the first distance of the defective electrode plate based on the second distance; and a first control module, configured to control the defect rejection mechanism to reject the defective electrode plate, under a condition that the updated first distance of the defective electrode plate satisfies a preset condition.

**9.** The apparatus according to claim 8, wherein the first distance recording module is specifically configured to: add an element associated with the defective electrode plate into a stack of the defect rejection device, with the first distance of the defective electrode plate stored in the stack as an element value of the element associated with the defective electrode plate, upon the defective electrode plate detection mechanism detecting that the battery electrode plate is the defective electrode plate; and the first distance updating module is specifically configured to: update the first distance of each element in the stack based on the second distance.

**10.** The apparatus according to claim 9, further comprising: a second control module, configured to control the defect rejection mechanism to cut a string of battery electrode plates to be combined with separators, under a condition that a quantity of elements in the stack is less than or equal to zero, and a length of the string of battery electrode plates passing through the defect rejection mechanism is a preset battery cell length.

**11.** The apparatus according to claim 8, wherein the second distance obtaining module comprises: a feedback value obtaining unit, configured to, upon arrival of an $N^{th}$ scanning period, obtain a first feedback value of the drive mechanism in the $N^{th}$ scanning period, wherein N is an integer greater than 1, and the first feedback value is associated with a distance that the battery electrode plate moves as driven by the drive mechanism; and a second distance determining unit, configured to determine a difference between the first feedback value and a second feedback value as the second distance, wherein the second feedback value is a feedback value of the drive mechanism in an $(N-1)^{th}$ scanning period.

**12.** The apparatus according to claim 8, wherein the first distance recording module comprises:
a defective electrode plate determining unit, configured to determine that the battery electrode plate is the defective electrode plate, under a condition that the defective electrode plate detection mechanism detects that the battery electrode plate is provided with a defect identification, wherein the defect identification is an identification pasted on a battery electrode plate of a roll of battery electrode plates that is provided on the defect rejection device; and a first distance recording unit, configured to record the first distance of the defective electrode plate.

**13.** The apparatus according to claim 8, wherein the defect rejection device further comprises a cutting position detection mechanism provided between the defective electrode plate detection mechanism and the defect rejection mechanism; the apparatus further comprises: a second distance updating module, configured to update the updated first distance of the defective electrode plate to a third distance, based on a cutting position signal, wherein the cutting position signal is a signal generated by the cutting position detection mechanism when detecting a cutting position of the defective electrode plate based on the updated first distance of the defective electrode plate, and the third distance is a distance between the cutting position detection mechanism and the defect rejection mechanism; and the first control module is specifically configured to: control the defect rejection mechanism to cut off the defective electrode plate at the cutting position, to reject the defective electrode plate.

**14.** The apparatus according to claim 13, wherein during the transmission process of the battery electrode plate to the defect rejection mechanism as driven by the drive mechanism, the drive mechanism is coupled to the defect rejection mechanism; and the first control module is specifically configured to: under a condition that it is determined that the cutting position of the defective electrode plate reaches the defect rejection mechanism, decouple the drive mechanism from the defect rejection mechanism, control the drive mechanism to stop driving transmission of the defective electrode plate, and control the defect rejection mechanism to cut off the defective electrode plate at the cutting position, to reject the defective electrode plate.

**15.** A defect rejection device, comprising a processor, a memory and programs or instructions stored in the memory and executable on the processor, wherein the programs or instructions, when executed by the processor, cause steps of the control method for defect rejection of battery electrode plates according to any one of claims 1-7 to be implemented.

**16.** A machine-readable storage medium, having programs or instructions stored thereon, which, when executed by a processor, cause steps of the control method for defect rejection of battery electrode plates according to any one of claims 1-7 to be implemented.

**Fig. 1**

During a transmission process of a battery electrode plate to the defect
rejection mechanism as driven by the drive mechanism, upon the
defective electrode plate detection mechanism detects that the battery
electrode plate is a defective electrode plate, recording a first distance of
the defective electrode plate

201

Obtaining a second distance that the defective electrode plate moves as
driven by the drive mechanism, during a transmission process of the
defective electrode plate from the defective electrode plate detection
mechanism to the defect rejection mechanism

202

Updating the first distance of the defective electrode plate based on the
second distance

203

Controlling the defect rejection mechanism to reject the defective
electrode plate, under a condition that the updated first distance of the
defective electrode plate satisfies a preset condition

204

**Fig. 2**

Fig. 3

Fig. 4

## INTERNATIONAL SEARCH REPORT

| International application No. |
|---|
| **PCT/CN2021/135411** |

**A. CLASSIFICATION OF SUBJECT MATTER**

H01M 10/058(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI: 电池, 极片, 剔除, 驱动, 缺陷, 检测, 距离, 栈, battery, plate, eliminat+, drive, defect, detect+, distance, stack

**C. DOCUMENTS CONSIDERED TO BE RELEVANT**

| Category* | Citation of document, with indication, where appropriate, of the relevant passages | Relevant to claim No. |
|---|---|---|
| X | CN 210296536 U (SHENZHEN GEESUN INTELLIGENT TECHNOLOGY CO., LTD.) 10 April 2020 (2020-04-10)<br>description, paragraphs 5-24 | 1, 4-8, 11-16 |
| Y | CN 210296536 U (SHENZHEN GEESUN INTELLIGENT TECHNOLOGY CO., LTD.) 10 April 2020 (2020-04-10)<br>description, paragraphs 5-24 | 2-3, 9-10 |
| Y | CN 109507205 A (XINCHEN ZHUORUI (SUZHOU) INTELLIGENT EQUIPMENT CO., LTD.) 22 March 2019 (2019-03-22)<br>description, paragraphs 6-30 | 2-3, 9-10 |
| Y | CN 106628475 A (SICHUAN UNIVERSITY OF SCIENCE AND ENGINEERING) 10 May 2017 (2017-05-10)<br>description, paragraphs 41-69 | 2-3, 9-10 |
| Y | CN 102218406 A (SOUTH CHINA UNIVERSITY OF TECHNOLOGY) 19 October 2011 (2011-10-19)<br>description, paragraphs 36-39 | 2-3, 9-10 |

☐ Further documents are listed in the continuation of Box C. ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **12 August 2022** | **26 August 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

# EP 4 287 340 A1

**INTERNATIONAL SEARCH REPORT**
Information on patent family members

International application No.

**PCT/CN2021/135411**

| Patent document cited in search report | | | Publication date (day/month/year) | Patent family member(s) | | | Publication date (day/month/year) |
|---|---|---|---|---|---|---|---|
| CN | 210296536 | U | 10 April 2020 | CN | 110380130 | A | 25 October 2019 |
| CN | 109507205 | A | 22 March 2019 | None | | | |
| CN | 106628475 | A | 10 May 2017 | CN | 106628475 | B | 03 April 2020 |
| CN | 102218406 | A | 19 October 2011 | CN | 102218406 | B | 12 June 2013 |

Form PCT/ISA/210 (patent family annex) (January 2015)